Europäisches Patentamt

European Patent Office

Office européen des brevets

(19)

(11) EP 0 767 941 B1

(12) EUROPEAN PATENT SPECIFICATION

(45) Date of publication and mention
of the grant of the patent:
**14.10.1998 Bulletin 1998/42**

(21) Application number: **95907400.6**

(22) Date of filing: **11.01.1995**

(51) Int Cl.6: **G06K 9/32**

(86) International application number:
**PCT/US95/00407**

(87) International publication number:
**WO 96/00952 (11.01.1996 Gazette 1996/03)**

(54) **AUTOMATIC DETERMINATION OF LANDSCAPE SCAN IN BINARY IMAGES**

AUTOMATISCHE BESTIMMUNG VON LANDSCHAFTSABTASTUNG IN BINÄREN BILDERN

DETERMINATION AUTOMATIQUE DE LECTURE OPTIQUE EN MODE PAYSAGE DANS DES
IMAGES BINAIRES

(84) Designated Contracting States:
**DE FR GB**

(30) Priority: **29.06.1994 US 268216**

(43) Date of publication of application:
**16.04.1997 Bulletin 1997/16**

(73) Proprietor: **KODAK LIMITED**
**Hemel Hempstead Herts, HP1 1JU (GB)**

(72) Inventor: **KNOWLTON, Kenneth, C.**
**Merrimack, NH 03054 (US)**

(74) Representative: **Behrens, Dieter, Dr.-Ing. et al**
**Wuesthoff & Wuesthoff**
**Patent- und Rechtsanwälte**
**Schweigerstrasse 2**
**81541 München (DE)**

(56) References cited:
**US-A- 5 235 651**

• **PROC. 2ND ANNUAL SYMP. ON DOCUMENT
ANALYSIS AND INFORMATION RETRIEVAL,
April 1993, LAS VEGAS, NV, pages 123 - 133 D.
J. ITTNER 'Automatic inference of textline
orientation'**

**Description**

FIELD OF THE INVENTION:

This invention relates generally to document processing systems and, in particular, to a document processing system that includes an optical scanner for inputting data representative of information appearing on a page of a document.

BACKGROUND OF THE INVENTION:

One well known technique to enter one or more pages of a document into a document processing system employs an optical scanner to sense differences in optical contrast that occur on a surface of a page. The differences in optical contrast are converted to binary information (pixels) at a predetermined or selected resolution, such as 200 dots per inch (dpi), and are output in a scan line format. The output data may be subsequently compressed or otherwise processed to identify an informational content of the scanned image. Optical character recognition (OCR) is one well known processing technique that is used to convert the image pixels to codes for recognized alphanumeric characters.

The individual pages of multi-page documents are typically intended to be displayed and viewed in a portrait mode (first scanline across top of page as normally viewed). However, a document may also include one or more pages that contain information, such as spreadsheets, charts, and graphs, that are intended to be displayed and viewed in a landscape mode (i.e., rotated 90 degrees relative to the portrait mode). Printing such a page does not present a problem in that the page will be printed in its original orientation. However, for purposes of screen display and, by example, cut-and-paste editing operations it is desirable to have the image already rotated to the appropriate orientation. If a given page is intended to be viewed in the landscape format, but is instead displayed in the portrait format, the user is required to notice the discrepancy, request that the displayed page be rotated, and then wait until the displayed page is re-oriented (rotated) and re-displayed. This can be both annoying to the user and time consuming.

It is thus an object of this invention to provide a method to classify data input from a scanner as being in either a portrait format or a landscape format automatically, during or immediately after scanning a page.

It is a further object of this invention to provide a method to detect that a scanned page has a landscape format, and to produce auxiliary or replacement 90-degree rotated images before a first request to display the scanned page.

SUMMARY OF THE INVENTION

The foregoing and other problems are overcome and the objects of the invention are realized by a fast and efficient method of determining for a scanned image whether the image represents a document page that is intended to be viewed in the portrait mode or the landscape mode (rotated 90 degrees and typically wider than high as intended to be viewed).

The method of this invention does not require an OCR function to recognize letters or words per se. Instead, the method detects and recognizes graphic properties of lines of text which are assumed to exist even in basically graphical material, such as a chart or graph. The method operates to locate "character-sized" graphic objects in the scanned image data, and determines a spacing to a next horizontally adjacent graphic object and a spacing to a next vertically adjacent object. If the nearer of the two adjacent objects is within a predetermined fraction of the character's width, the direction to the nearer object suggests the likely direction of an adjacent character along a line of text. The preponderant direction, vertical or horizontal, from a plurality of such determinations is taken to be a "reading slope from horizontal" direction, and to thereby indicate whether the scanned page is in a portrait orientation or in a landscape orientation.

So as to include such languages as Japanese and Chinese as commonly written the invention operates to detect a picture plane azimuth of a "reading slope from paper crosswise" (for English, Hebrew and most boustrophedonic transcriptions this slope should be zero, for Japanese and Chinese 90 degrees). In all known cases, characters are typically positioned closer to each other along the reading line than are characters of successive lines. In general, after determining the reading slope direction, the system automatically rotates the image or not, according to the local culture's language and page formatting conventions.

Though the invention detects whether or not an image needs to be rotated 90 degrees for proper viewing, the invention does not detect which direction of rotation to perform. By convention, the exceptions (e.g. landscape) have been rotated in a particular sense and when this convention has been violated (and the resulting presentation turns out to be upside down), a user-mandated 180 degree rotation is much faster computationally than a 90 degree rotation. A 180 degree rotation typically involves inverting the line order, inverting the byte order along the line, and right-left flipping of the bytes by table lookup.

The method of this invention detects graphical objects. For some of the detected graphical objects, distances to other graphical objects (to the right and below) are determined. A count of nearest-neighbor-is-to-the-right is incremented, or a count of nearest-neighbor-is-below is incremented, or neither is incremented.

An object from which distances are noted is expected to meet certain requirements: its bounding box width (width dimension) must be not less than a first threshold, its bounding box length (length dimension) must be not greater than a second threshold, and the bounding box aspect ratio (length:width) must be not greater than a third threshold.

The objects to which distances are measured are not necessarily other occurrences of the first kind of object. The method measures the width of a "window" to the right and the height of a clearspace "pedestal" below the object. Whichever of these distances is less determines which count, if either, is incremented.

As employed herein, the window width is the nearest approach, along any scanline, between an object and an object (of almost any nature) to the right, and the pedestal height is the nearest approach of a portion of the bounding box to any object (of whatever kind) below the object.

The page image need be available only one scanline at a time. Each scanline furthermore is required to be available but once. The method of this invention is efficient in processing speed. The processing speed is enhanced by employing a reduced image, and also by managing data blocks for objects as doubly linked lists.

In his article "Automatic inference of textline orientation" (Proc. 2nd Annual Symp. on Document Analysis and Information Retrieval, April 93, Las Vegas, NV, pages 123-133) D.J. Ittner describes a method and apparatus for determining the orientation of a digitized page by using bounding boxes. In contrast to the invention, however, this method uses the center of each bounding box to define vertices in a fully connected undirected graph. Subsequently, a tree MSP (=minimum spanning tree) is constructed containing all vertices such that the total length of the tree is a minimum and the orientation of the page is derived therefrom.

US patent specification 5,235,651 discloses a method and apparatus for determining the orientation of an image of a digitized page by scanning a subsample array part of the image line by line, determining the number of transitions black - white/ white - black in order to find out lines of blanks. If a line exceeds a minimum number of zero (= blank) elements or has a minimum number of transitions, it is assumed that a blank line has been detected and the orientation of the page is derived therefrom. There is a noticeable error rate.

The invention as defined by the appended claims provides a method and an apparatus for determining whether a digitized page is intended to be viewed in a first, portrait orientation or in a second, landscape orientation that is rotated with respect to the first orientation.

The method includes a first step of examining an image of the digitized page on an image scanline by image scanline basis to detect occurrences of graphic elements having a length that is not greater than a length threshold and a width that is not less than a width threshold. The thresholds are predetermined to correspond to the expected dimensions of "charactersized" graphic objects. For each detected occurrence, the method determines a spatial relationship of the detected occurrence to other adjacently disposed objects. The method further operates, in accordance with a plurality of the determined spatial relationships, to declare the digitized page to have one of the first orientation and the second orientation.

The step of determining a spatial relationship determines an amount of a spatial separation between the detected occurrence and an adjacent object on the same scan line and to an adjacent object on a succeeding scanline. The step of examining includes a step of forming, for each scanline, a list of spans of contiguous image pixels each having a predetermined value, and the step of determining a spatial relationship determines, for each span of the list, a distance to a next span on the same scanline, and for a last span of an image object, a distance to a first span on a succeeding scanline. Each image object has an associated bounding box and a clear pedestal having a width that is a function of the width of the bounding box. The distance to the first span on a succeeding scanline defines a height of the pedestal. A further step of the method selectively increments one of a first counter and a second counter as a function of a horizontal separation (i.e., window width) being greater than, or less than, a vertical separation (i.e., pedestal height), and the step of declaring includes a step of determining a ratio of a value of the first counter to a value of the second counter.

BRIEF DESCRIPTION OF THE DRAWINGS

The above set forth and other features of the invention are made more apparent in the ensuing Detailed Description of the Invention when read in conjunction with the attached Drawings, wherein:

Fig. 1 is a simplified block diagram of a document processing system that is constructed and operated in accordance with this invention;

Fig. 2 illustrates two exemplary character-sized objects, and a portion of a third, and is useful in understanding the nomenclature of this invention;

Fig. 3 is logic flow diagram for processing a scanline in a presently preferred method of this invention;

Fig. 4 is useful in describing a "smearing and filling" technique to enhance a background span histogram; and

Figs. 5A-5G are useful in describing the processing of pixel spans in accordance with this invention.

DETAILED DESCRIPTION OF THE INVENTION

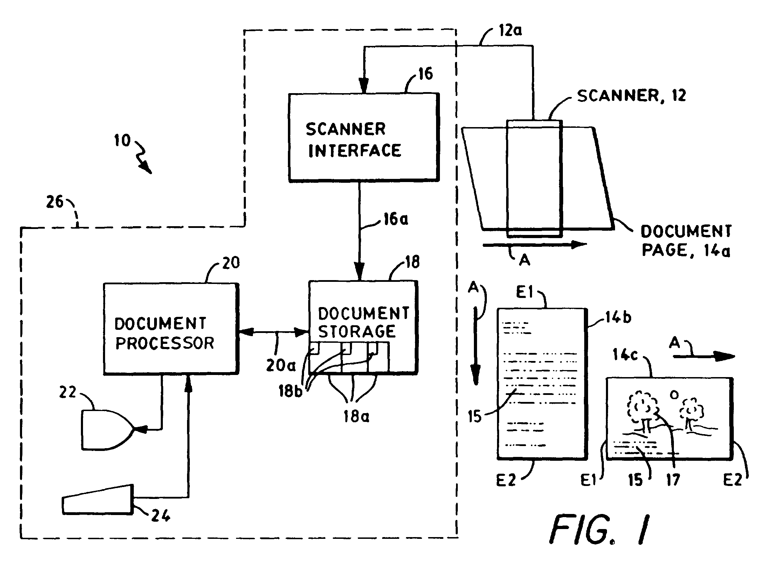

Fig. 1 illustrates a document processing system 10 that is constructed and operated in accordance with this invention. A conventional document scanner 12 is employed to detect an optical contrast resulting from printed text and graphical images that appear on a surface of a scanned document page 14a. For some types of scanners a relative motion between the scanner 12 and the page 14a causes the scanner 12 to output on signal line(s) 12a a sequence of binary ones and zeros that are indicative of the optical contrast that is sensed by the scanner. For other types of scanners, such as CCD cameras, there need be no relative motion between the page and the scanner. By example, a binary one indicates the presence of a dark area on the page 14 (a portion of a character or a graphical image), while a binary zero indicates an absence of a dark area (the background or "whitespace"). As employed herein the binary ones and zeros are each referred to as a pixel. The binary information is output in a scanline format, wherein a scanline is oriented perpendicularly to the scan direction (indicated by the arrow A). As such, a single scanline will typically include pixels from portions of characters. As an example, and assuming the resolution of the scanner 12 is 200 dpi and that the page 14a is 8.5 inches wide, a scanline can comprise up to 1700 discrete pixels (8.5 X 200). Typical scanner resolutions are in the range of 100 dots (or pixels) per inch (along the scanline) to 400 dpi.

For reference purposes, the document page 14b is seen to be in the portrait orientation and to include only alphanumeric character information 15. In contrast, the document page 14c is in the landscape orientation and includes both character information 15 and also graphical (non-character) information 17. When scanned, both of the pages 14b and 14c are scanned in the same manner. That is, the scanner 12 begins at a first edge El, perpendicular to the longest dimension of the page, and ends at the second, opposite edge E2. It can be appreciated that this causes the characters 15 of page 14b to be scanned (along the direction A) from top to bottom, while the characters 15 of page 14c are scanned from left to right.

Coupled to the signal line(s) 12a, and hence to the output of the scanner 12, is a scanner interface 16. In this embodiment of the invention the scanner interface 16 is constructed and operated so as to execute the method of this invention, as will be described in detail below.

An output of the scanner interface 16 is coupled via a bus 16a to a document storage module 18. Storage module 18 may be embodied within semiconductor memory, magnetic or optical disk memory, magnetic or optical tape, or any form suitable for storing the digitized document page data. As shown, the storage module 18 has three stored document pages represented as page data blocks 18a.

In one embodiment of this invention each page data block 18a has a field 18b wherein an indication is stored by the scanner interface 16 as to whether the associated page data, when retrieved, is to be displayed in the portrait or the landscape orientation. If the field 18b indicates the landscape orientation, a rotation operation is performed prior to the display of the associated page data.

In another embodiment of this invention the field 18b can be eliminated, and the page data block 18a is correctly formatted (rotated) by the scanner interface 16 prior to storage within the storage module 18. This latter embodiment eliminates the performance degradation that may occur if the rotation is required to be performed just prior to the display of the page.

Accessing of the document storage 18 and display of the pages is controlled by a document processor 20. This processor is bidirectionally coupled to the document storage module 18 via bus 20a, and is also coupled to conventional user interface devices such as a CRT display 22 and keyboard 24. The CRT display 22 preferably has graphical capabilities to enable the display of the 2-dimensional arrays of pixels such as are provided by the scanner. The document processor 20 may have word processing and editing capabilities, although for a document archiving application these capabilities may not be required or desirable.

It should be realized that the components 16-24 may all be incorporated within a single data processor 26, such as a personal computer. In this case, the scanner interface 16 may be a software module that is invoked to process the output of the scanner 12, which may be coupled to a parallel or a serial port of the data processor 26 in a conventional manner. Also in this case, the buses 16a and 20a may be the same system bus, whereby the scanner interface software and the document processor software are interfaced to the main memory and mass storage components of the data processor 26. In a further embodiment of this invention the scanner 12 can be made an integral component of the data processor 26.

As such, it should be understood that the embodiment of the document processing system 10 of Fig. 1 is intended to be viewed as an exemplary embodiment of this invention, and is in no way intended to be viewed as a limitation upon the practice of this invention.

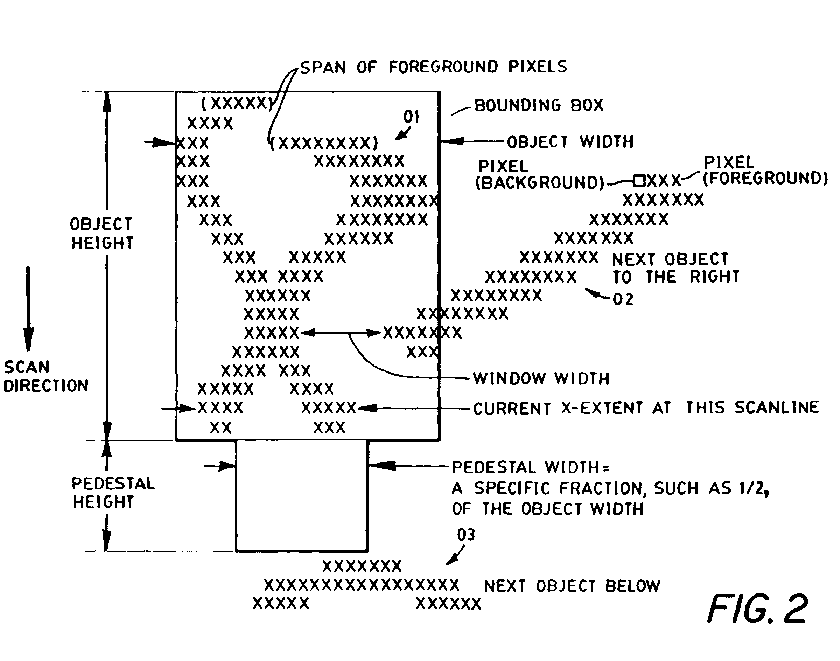

The method disclosed herein assumes certain particular characteristics of document page images. A first assumed characteristic is that, regardless of orientation, each image contains one to several lines of text, almost all of which, as intended to be viewed, run in a culturally determined direction on the page, for English horizontally. In order to determine in which direction the line of text is oriented, and referring now to Fig. 2, the method determines whether character-size graphic objects (O1, O2, O3) are nearer, horizontally or vertically, to neighboring objects. To this end, a second assumption is that character-to-character spacing along a line of characters is typically less than the spacing between lines of characters. This latter assumption leads logically to a third assumption; i.e., that only two tallies or counters are required. A first counter counts acceptable objects whose nearest neighboring objects are to the right, and a second counter counts acceptable objects whose nearest neighboring objects are below.

A preferred technique for processing the character-sized graphic objects is to determine a bounding box about each object. As such, the particular processing methods that are employed by this invention are a function of the sizes and aspect ratios of the character-sized graphic objects, as determined from their bounding boxes, and of spatial relationships to nearby objects.

It is first noted that the inventor has determined that several apparently "intuitive" assumptions regarding the identification of character-sized graphic objects can result in erroneous determinations.

A first such assumption is that bounding boxes of "characters", as intended to be viewed, will almost always be taller than wide. However, this assumption has been found to not be reliable because: (i) it is commonly violated by lower case m's, w's, etc., and (ii) successive characters, especially capital letters with serifs, often touch, and kerning often causes bounding boxes to touch even when the characters themselves do not. Thus, bounding boxes are quite often wider than high.

If a histogram is constructed of background spans (a sequence of pixels all having the value of background, such as 0) in both directions, it might be assumed that there will be a preponderance of short stretches of background pixels between foreground pixels (e.g., pixels having a value of 1) in the direction along a line of text. However, the results from such analyses are not determinative, largely because of the presence of many intra-character spans, both vertically (e.g., a c e s t z E F Z...) and horizontally (e.g., h m n u v w A H...).

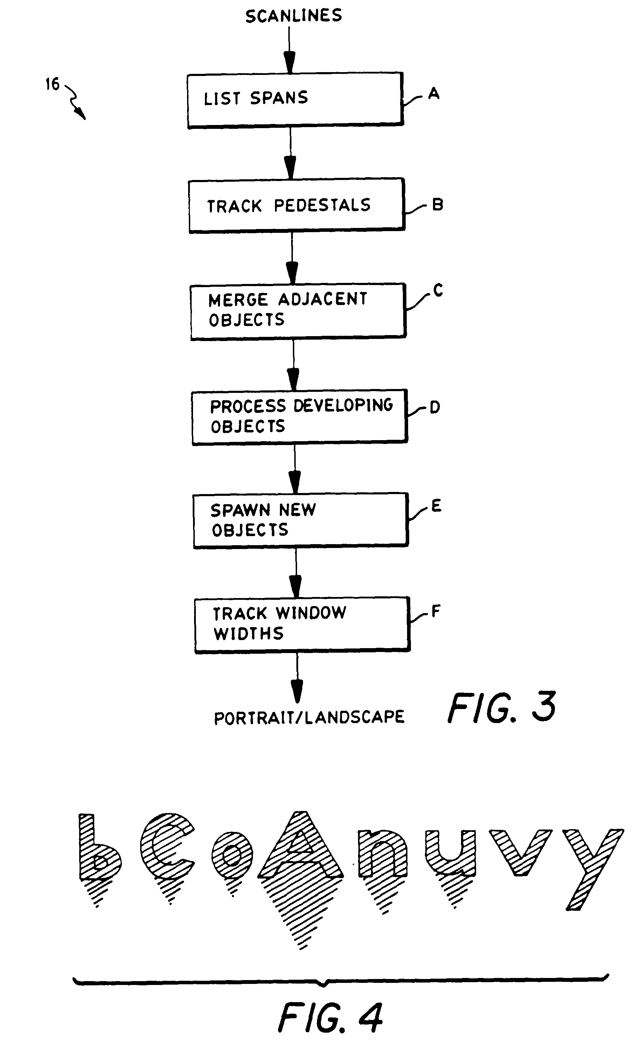

A further erroneous assumption is that the above-described histogram technique can be revised to include "smearing" and "filling" operations. That is, and as is shown in Fig. 4, let a residual image of black (foreground) spans be ORed onto each successive line, making a downward "streak". However, before ORing the residual, each of its foreground spans is decreased by a pixel on each end. The intent is to fill in enclosed background spaces (e.g., b d e o p q A B...) and downward-pointing concavities, either completely (as in the case of m n h) or partially (c s). Upward-pointing concavities (e.g., u v w y) would be unaffected by this technique. The end result is that below each character would be formed a downward pointing "shadow" that terminates in a point approximately one-half of a character width below the character. This is indeed an improvement over the simple histogram technique, but it has been determined that resulting background span histograms are still not sufficiently distinctive, particularly because of contributions to them from structured image material that is not comprised of text.

The method described below overcomes the problems that would arise from the adaptation of one or more of these various approaches concerning the identification of characters within a scanned document image.

In this invention, a "character-sized" graphic object is defined to have a length (bounding box height-or-width maximum) that is within first predetermined limits (e.g. .05" to .50"); a width within second predetermined limits (e.g. .02" " to .30"); and length:width aspect ratio that does not exceed a third predetermined allowed maximum limit (such as 4).

In this invention, a "next-neighbor" object is defined to be spaced away from a first character-sized graphic object by an amount that does not exceed some fraction of the minimum dimension (e.g. 2/3) of the first character-sized graphical object.

The method of this invention assumes that the storage area allotted to this process, e.g. within module 16 of Fig. 1, is limited. Consequently the method preferably accepts and processes just one scanline at a time, in top-to-bottom order, keeping on hand only three full scanlines: a "current" scanline to be processed in detail, a previous scanline, and a next (look ahead) scanline.

The method also assumes that computation time is important, since the method is most likely to be included within the scanner driver or interface itself (as in Fig. 1) or closely downstream from the scanner interface. The execution of the method preferably should not drastically impede ongoing work, but neither is it desirable to make it a totally separate process because of the large amount of additional I/O that would be required. In this invention high speed operation is achieved primarily by (1) processing reduced (e.g., 100 dpi) images and (2) maintaining data for "objects in process" in doubly linked lists.

Due to the large number image formats: e.g., 0's on 1's or 1's on 0's, high or low bit image leftmost, successive bytepairs swapped or not; and also due to the large number of possible input resolutions, with 100, 200, 300, and 400 dpi being the most common, the method further standardizes the input from the scanner as follows:

bytes in order (8 pixels = 1 byte);
high order image bit (MSB) leftmost;
1's (foreground) on 0's (background); and
100 dpi (by ORing NxN regions of foreground pixels to form one pixel).

The presence of horizontal and/or vertical lines, commonly used in diagrams and charts, may confound simple decision making procedures in many ways. For example, the lines, or parts of them, may themselves be wrongly interpreted either to be characters or the next-character neighbors of characters, as when text appears barely above a horizontal line. In accordance with this invention the problems that arise from horizontal and vertical lines within the image data are not dealt with symmetrically because the image processing is directional in nature. That is, the image processing proceeds one scanline at a time from image top to image bottom.

Horizontal lines are essentially eliminated by preprocessing a received scanline. That is, in a first pre-processing step the incoming scanline is purged of contiguous spans of foreground pixels that are longer than the allowed range of character sizes. Any jagged edges of such lines are further purged by a second pre-processing step which eliminates all foreground pixels not having foreground pixel neighbors that are immediately above or below.

Vertical lines (or segments thereof) are disqualified from consideration as characters or neighbors of characters if they do not have a sufficient thickness, or if the height:width aspect ratios of those parts of the objects seen thus far exceed an upper limit (e.g. 4:1).

The determination of the space between character objects is in general more complicated than determining the space between bounding boxes. This is because of kerning, and because serifs or other projections can easily make bounding boxes (of characters as normally perceived) overlap and merge. The method therefore preferably distinguishes between the current left-to-right extent of a character, as indicated by the current scanline's foreground span (s) for that character, and the leftmost and rightmost extents of the character thus far encountered.

To this end, the horizontal distance (width of the "window" of clear space as in Fig. 2) to the next object O2 in the scanline direction is tracked as the minimum-so-far distance from the character's current extent to that of the next object in the scanline direction.

The vertical distance to the next object is taken to be the height of a clear "pedestal" area under the bounding box of the object O1. The pedestal is defined to begin at the level where the object O1 ends, to have a width that is a specific fraction, such as 1/2, of the width of the bounding box, and to continue downward until some span of foreground pixels, associated with O3, is encountered. This downward extent defines the pedestal height.

Fig. 2 shows all of these relationships for two complete horizontally adjacent character-like graphic objects (O1 and O2) and a portion of a third, vertically adjacent, graphic object O3. Fig. 2 also illustrates the case where the originally separate-object tops of 01 have merged.

To enhance processing speed, all objects are preserved in left-to-right order in two doubly-linked list structures. One list structure is for objects under development, the other list structure is for objects whose bottom-most extents have been reached, but whose clear-space pedestals are currently being tracked downwards along the vertical axis.

All of the above-described and illustrated dimensions originate in some manner from lists of contiguous spans of foreground pixels along a scanline. In Fig. 2, the object O1 is comprised of parts of 18 scanlines each having either one or two spans of foreground pixels, whereas the object O2 is comprised of parts of 10 scanlines, each having one span of foreground pixels. These spans are employed selectively to: (i) spawn new objects, (ii) stretch an object's bounding box to the left, right and/or below, and (iii) to merge two adjacently disposed objects into one. They also serve to end the downward projection of the free-space "pedestals" beneath objects, thereby establishing the height of the pedestal.

In view of the foregoing it can be appreciated that an important aspect of this invention is the detection and processing of spans of foreground pixels within the image data. As illustrated in Fig. 3, this aspect of the method of this invention includes six major steps (designated A-F) that are performed for each scanline (of the reduced 100 dpi image). Briefly, the first step (A) produces a list of foreground spans, then five passes (B-F) are made through this list and/or lists of associated objects and/or pedestals.

Briefly, the steps of Fig. 3 are as follows:

(A) List spans by alternately finding the next 1-bit, then the next 0-bit, etc. until coming to either a 1 or 0 that has been artificially inserted just to the right of the actual data.

(B) Track the pedestals by determining how every continuing pedestal relates to foreground spans, and continue or terminate the pedestals accordingly.

(C) Merge adjacent objects, considering diagonally adjacent foreground pixels as "touching", by iteratively merging every pair of sequentially adjacent objects whose current horizontal extents touch the same span.

(D) Process developing objects in accordance with spans by, for every span that touches an object, extending the object's left and right bounds to include the entire span. Each span that touches an object is marked as "used", i. e. accounted for as part of some developing object. For every object that has no continuation via any span, terminate the object and either reject it or re-list it as a pedestal that needs to be tracked.

(E) Spawn new objects by the step of, for every unused span (not part of a continuing object), creating a new object of which this span is the top layer of pixels. New objects start with "unacceptably wide" window widths.

(F) Track window widths by the step of, for each developing object, determining the clear distance on the current scanline to the next span to the right; if the clear distance is less than the currently defined window width, decrease the window width accordingly.

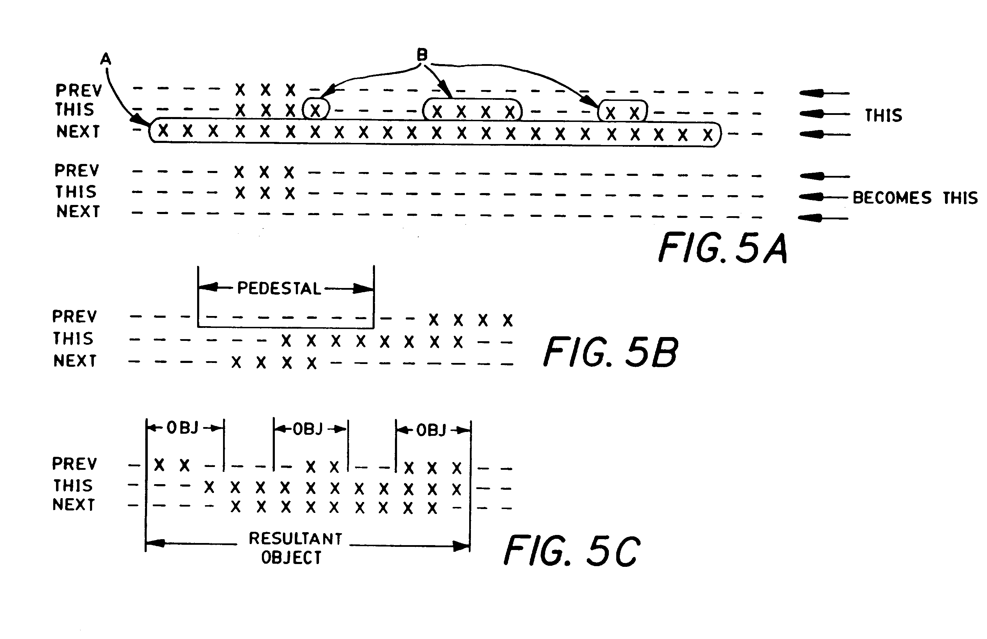

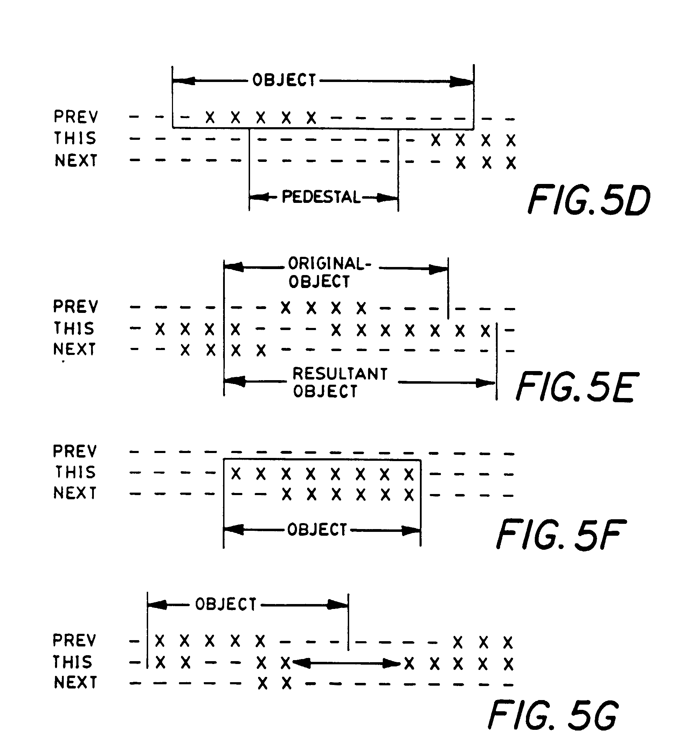

Figs. 5A-5G illustrate the effects of the presence or absence of foreground pixel spans. Fig. 5A shows (at A) that long spans are eliminated in the look-ahead line, and then the foreground pixels (at B) of the current line, that have no neighbors above or below, are eliminated. Fig. 5B shows that when a span of the current line overlaps a pedestal, the pedestal ends. Fig. 5C shows that when a span of the current line touches spans of two or more developing objects, the objects merge and the resultant object continues. Fig. 5D shows that when no span of the current line touches the previous line's horizontal extent of a developing object, that the object ends and its pedestal begins. Fig. 5E shows that when one or more spans touch the current horizontal extent of a developing object, the object's lateral bounds are stretched to include the span(s). Fig. 5F shows that when a span remains, that is, is not part of a continuing object, a new object is spawned. And finally, Fig. 5G shows that when clear space to the right of a developing object's rightmost span on this scanline is determined; the object's window is clipped to, at most, this distance.

The steps (A-F) set out above are further elaborated in the following pseudocode, where text following a is a continuation of text from the preceding line.

It is first noted that the five passes could be merged, but at the expense of considerable complexity because of the combinatorially rich ways that spans and object sequences can mesh along a given scanline. As such, for clarity and maintainability, it is preferred to maintain the steps (B-F) as discrete passes through the list of spans.

Step A
------

This step operates to cull horizontal spans from the scanline, and to detect and list all remaining black spans (spans of foreground pixels) in the image scanline.

More particularly:

```
for each contiguous string of N or more full-
    foreground bytes in the look-ahead line
    zero the string
    zero adjacent foreground bits in bytes
bounding
                            the string
    zero all 1-bits of current line without 1-bits
above
                            or below
    put additional byte with 1-bits and 0-bits at end
of
                            image line
    start scan on left end
    while not off right end
        find next 1-bit
        if off end of image, break out of 'while' loop
        find next 0-bit
        record next-1 to next-0 as next span found,
                            increment spancount
    add to list an additional artificial span far right
                            of image.
```

Step B

Track the pedestals by the steps of:

```
set pedestal pointer to left end of pedestal list
for every black span (including artificial span
                      far right of image)
        for every additional pedestal totally before
                      this span
          if pedestal already too high OR higher
                      than window width:
              if window narrow enough,
                    tally one for PORTRAIT
                  discard pedestal
            [else let pedestal grow vertically]
        for  every  pedestal  overlapping  this  span
                      [pedestal ends]
            if window width<height, window width OK,
                              aspect ratio OK
                  tally one for PORTRAIT
            else if height<window width, height OK,
                                 aspect OK
                  tally one for LANDSCAPE
                discard pedestal.
```

Step C

The next step merges adjacent objects by the steps of:

```
start with left and right object pointers at left
                      end of object list
for every span


        advance left object pointer until not left of
                              span,
        if properly right of span, restart 'for' loop
                              with next span

        [else overlaps]
        set right object pointer there
        advance  right  pointer  until  right  pointer
                      properly right of span
        back up right pointer by one
        until pointers point to the same object:
            merge left object into right one:
                use left object's left bound
                use higher object's top
            snip  out  and  discard  left  object,
                      advancing left pointer
        if new object too wide, discard it.
```

Step D

The next step processes the objects in accordance with spans (diagonal pixels "touch").

```
set pedestal insert point to left end of list
set span pointer to leftmost span
set object pointer to leftmost object
while object pointer not off right end of object
list
        set: object_continues = FALSE
        skip over spans completely left of object
        set leftlim = far right
        set rightlim = far left
while not off end of span list
        if span completely right of object, break out
                                of  'while' loop
        conditionally  stretch  leftlim,  rightlim  to
                                include span
        set: object_continues = TRUE;
        nullify span (mark it "used")
set current extent of object to leftlim, rightlim
stretch object's left,  right extremes to include
                                leftlim, rightlim
if object now too wide
        discard object (remove from object list, put
        in                         free list)
        continue outer 'while' loop
if object_continues is TRUE, continue outer
                                'while' loop
[else object dimensions are final]
determine maximum and minimum dimensions of
                                object
if max too big or min too small or aspect ratio
                                too large
        remove object from object list
        put block in free list
else
        remove object from object list
        scan  pedestal  insert  point  to  find  new
                                pedestal's location
        put block into pedestal list
        set pedestal top to current scanline
        set pedestal left, right to 1/2 of object's
                                left, right bounds.
```

Step E

The next step spawns new objects, for unused spans, by the steps of:

```
set object pointer to left end of object list
for each span
        if span has been "used", continue 'for' loop
                                with next span
        search right in object list to find point to
```

```
                                    insert new object
        if  no  free  block  to  use,  break  out  of
        'for'loop
        get  new  block,  insert  into  object  list  with
                                    object parameters:
              left edge = current left = span's left
              right edge = current right = span's right
              window right = far right off image
              object top = current scanline
```

Step F

The last step decreases the window width if the next object to the right is now closer, by the steps of:

```
for each object
      determine right edge of this object's current
                                    x-extent
      determine left end of next span to the right
      if  this  is  new  low  for  distance  to  right
      object
            truncate this object's window to this
                                    distance
```

The method of this invention has been found to be capable of processing an entire image of text and/or alpha-numerics and to yield counts, in the rightward direction, with typical ratios of 20:1. This implies that a reliable decision as to the orientation on the page (portrait or landscape) often can be made long before the entire image is processed. For a varied sample comprised of graphs, charts, advertisements, lists, etc., the ratios, in the rightward direction, were found to range from 2:1 to 50:1.

A straightforward and simple technique to employ this invention starts with artificial portrait and landscape tallies of, by example, five each. The method then increments these tallies as described above. A reliable declaration that an image is in the landscape format can be made when the percentage of landscape tallies,

$$\frac{100 \text{X(landscape tallies)}}{\text{landscape\_tallies} + \text{portrait\_tallies}}$$

is greater than approximately 75. A reliable declaration that an image is in the portrait format can be made when this percentage is less than approximately 25.

As an example, the computer processing time consumed by the method, on a conventional 386-based personal computer, and assuming that scanlines pass through the high speed RAM main memory, has been found to be on the order of six seconds for processing an entire 8.5" x 11" 300 dpi image. Furthermore, it has been determined that typically only a second is required until a reliable determination can be made as to whether the image is in the landscape format or the portrait format.

It can be appreciated that the method described herein is fast, requires a minimum of memory and no special hardware to implement, accesses only a scanline of the image at a time (in order), that the accumulating tallies are available to the caller at any time, that the method is robust, and is not dependent on the use of any standard fonts or formats.

That is, the method can be used to detect the occurrence and spatial orientation of strings of character-sized graphic objects that probably represent alphanumeric characters, special symbols such as mathematical operators, and graphical images representing characters from a number of different languages.

In accordance with the foregoing description of a preferred embodiment; this invention provides a process and a system for automatically determining a direction of presumed text. In a prepared image of the text counts are tabulated on validated objects, as defined below, whose nearest neighbor objects are relatively disposed in a first direction and that are acceptably near the validated object. Counts are also tabulated on validated objects whose nearest neighbors are relatively disposed in a second direction and that are acceptably near the validated object. This process need be performed but approximately, using a fast and simple computation during a single forward top to bottom pass over the image on a scanline by scanline basis. The process terminates when a decision process, based on the counts, so determines the direction of presumed text, and lines of presumed text in the image are thereupon declared to lie in the first direction or in the second direction. The first direction and the second direction are, for example, to the right and below, respectively.

Preparation of the image may include forming a reduced and/or standardized image at a fixed resolution and format, the prepared image forming the basis for the remainder of the process.

The fixed resolution may be, by example, 100 dots (pixels) per inch, or some other common submultiple of conventional scanning resolutions. The standardized format may be, for example, scanlines in order from image top to image bottom; or scanline bytes in order from left to right. Bits in each scanline byte in order may have a most significant bit (MSB) leftmost in the image, with 1-bits representing foreground pixels and 0-bits representing background pixels.

Preparation of the image can also include the removal of extra-long spans of contiguous foreground pixels where, after removal of the extra-long spans of contiguous pixels, preparation of the image may additionally include removal of any remaining foreground pixels that have no immediately adjacent foreground pixels that are located directly above or below.

Objects are considered to be disjoint sets of spans resulting from the partition of foreground spans of the image, such that each set is transitively connected. The partition has the normal mathematical sense, herein meaning that every span is a member of some object. The word disjoint also has the normal mathematical sense, herein meaning that no span is a member of more than one object. A span is herein considered as a maximal contiguous set of foreground pixels along a scanline, bounded by background pixels on left and right ends. A pair of connected spans are spans of adjacent scanlines containing at least one pair of adjacent pixels, one from each span. For one pixel, an adjacent pixel thereto is any of the eight immediate neighbors in the four orthogonal and four diagonal directions. Alternatively, from one pixel, an adjacent pixel is any of the four orthogonal neighbors: left, right, above, and below.

As employed herein transitively connected means that if span A is connected to span B, and span B is connected to span C, then span A is (transitively) connected to span C, and so forth, iteratively, to include as the set defining an object all spans thus directly or indirectly connected to each other.

As employed herein a validated object is one whose shorter dimension of bounding box is not less than a minimum acceptable width, whose longer dimension of bounding box is not more than a maximum acceptable length, whose bounding box aspect ratio of length to width is not more than a maximum acceptable aspect ratio, and whose distance to the nearest neighboring object to the right or below is within an acceptable threshold distance.

The location and dimensions of an object's bounding box are taken as the leftmost, rightmost, topmost, and bottommost coordinates of pixels comprising spans that comprise the object.

The maximum and minimum dimensions and maximum aspect ratio of bounding boxes are predetermined to be approximately equal to those of bounding boxes of characters of the local language, as used in the context of the application of this invention.

The distance to the nearest neighboring object to the right is defined as the closest approach in pixels, along any scanline, of any span of the object with any other span of acceptable length not belonging to this object. The distance to the nearest neighboring object below is the vertical distance in scanlines from a portion of the bottom of the object's bounding box directly downward to the first encountered span of foreground pixels. A used portion of the bottom of the bounding-box is a certain fraction of the bottom of the box, for example, one-half, where the used portion of the bottom of the bounding box is centered along the bottom of the bounding box. An acceptably low distance is some fraction of the object's bounding box width (minimum dimension), for example 2/3 of the width.

The decision procedure is based on the relationship of the vertical nearness count to horizontal nearness count. In some cases this results in a determination of the direction of presumed text being made at an intermediate point during the processing of the image. Otherwise the determination is made at the end of processing the entire image.

The decision is made during image processing accordingly if and when the horizontal-to-vertical ratio or excess ever exceeds a preset threshold, the declaration being for horizontal text lines, conversely for vertical if the converse (vertical-to-horizontal) ratio or excess ever exceeds the threshold.

If a ratio is used, each count may be set initially to some artificial non-zero number, for example 5, and the deciding ratio may be, for example, 3:1.

If excess rather than ratio is used for determination, the deciding excess may be some predetermined number, for example 50 more horizontal tallies than vertical, or vice versa.

A decision, if made at the end of processing the image to completion, depends on a simple comparison of the counts; wherein the greater count indicates its associated direction as the direction of presumed characters along presumed lines of text.

A decision, made during or after processing the image, alternatively, may be in accordance with some other monotonic function of the relative magnitudes of the two counts.

Although described above in the context of specific dimensions and size relationships, values for foreground and background pixels, scanline resolutions and the like, it should be realized that a number of changes can be made to these parameters without departing from the scope of the teaching of this invention. Furthermore, it can be realized that the individual blocks of the logic flow diagram of Fig. 3 can be implemented in whole or in part by serially connected circuitry, such as programmed processors, that function to execute the described functions.

**Claims**

1. A method for determining whether a digitized page is intended to be viewed in a first orientation or in a second orientation that is rotated with respect to the first orientation,
comprising the steps of:

   preprocessing, if necessary, an image of the digitized page to place the image into a predetermined format, the image containing at least one line of text;

   examining the preprocessed image of the digitized page on an image scanline by image scanline basis to detect occurrences of graphic objects having a length dimension that is not greater than a maximum length threshold and a width dimension that is not less than a minimum width threshold;

   for each detected occurrence, determining spatial relationships of the detected occurrence to other adjacently disposed graphic objects, the spatial relationships being determined along axes that are parallel to the scanlines and that are perpendicular to the scanlines; and

   in accordance with a plurality of the determined spatial relationships, declaring the digitized page to have one of the first orientation and the second orientation and performing one of setting a stored page image rotation indicator accordingly or rotating the page image prior to storage.

2. A method as set forth in claim 1
wherein the first orientation is a portrait orientation, and wherein the second orientation is a landscape orientation.

3. A method as set forth in claim 1
wherein a length range and a width range are each predetermined to be approximately equal to expected ranges of lengths and widths of textual characters.

4. A method as set forth in claim 1
wherein the step of examining includes a step of forming, for each scanline, a list of spans of contiguous image pixels each having a predetermined value.

5. A method as set forth in claim 4
wherein the step of determining a spatial relationship determines an amount of a spatial separation between a span and the subsequent span on the same scanline and to a subsequent span on a succeeding scanline.

6. A method as set forth in claim 4
wherein the step of determining a spatial relationship determines, for each span of the list, a distance in pixels to a next span on the same scanline, and for a last span of an image object, a distance in scanlines to a first span on a succeeding scanline.

7. A method as set forth in claim 6
wherein each image object has an associated bounding box, wherein the distance to the first span on a succeeding scanline defines a height of a pedestal beneath the image object, wherein the pedestal has a width and lateral position that are functions of a width and a location of the bounding box, and further including a step of selectively incrementing one of a first counter and a second counter as a function of a ratio of a window width relative to a next span on the same scanline to a pedestal height.

8. A method as set forth in claim 7
wherein the step of declaring includes a step of determining a ratio of a value of the first counter to a value of the second counter.

9. A method as set forth in claim 1
   wherein the step of declaring is performed before the step of examining examines every scanline of the image.

10. A method as set forth in claim 6
    wherein the step of determining includes a step of merging image objects having spans that are adjacently disposed.

11. A method as set forth in claim 5
    wherein the step of examining includes a step of detecting and eliminating spans having a length along the scanline that exceeds a width threshold.

12. A method as set forth in claim 5
    wherein the step of forming includes a step of detecting and eliminating image pixels that do not have an adjacent image pixel on an adjacent preceding scanline or an adjacent succeeding scanline.

13. A method as set forth in claim 1
    wherein each image scanline is generated to have a first number of image pixels per unit length, and wherein the step of preprocessing includes a step of merging, if required, the image pixels so as to obtain a predetermined number of image pixels per unit length.

14. A method as set forth in claim 1
    wherein the dimension is a respective dimension of an orthogonally disposed bounding box.

15. A document processing system (10) comprising an input port for receiving a digitized page from a page scanner (12) and an interface (16) coupled to said input port, said interface comprising:

    means (20) for determining if the digitized page (14a) is intended to be viewed in a first orientation or in a second orientation that is rotated with respect to the first orientation, said determining means (20) comprising means for pre-processing, if necessary, an image of the digitized page, to place the image into a predetermined format, the image containing at least one line of text;
    means (20) for examining the preprocessed image of the digitized page on an image scanline by image scanline basis to detect occurrences of graphic objects (17) having a length dimension that is less than a maximum length threshold and a width dimension that is greater than a minimum width threshold;
    means (20), responsive to each detected occurrence, for determining a spatial relationship of the detected occurrence to other adjacently disposed graphic objects, the spatial relationship being determined along axes that are parallel to the scanlines and that are perpendicular to the scanlines; and
    means for declaring the digitized page (14a) to have one of the first orientation and the second orientation in accordance with a plurality of the determined spatial relationships, said declaring means performing one of setting a stored page image rotation indicator (18a) to indicate the orientation or rotating the page image prior to storage.

16. A system as set forth in claim 15
    wherein the first orientation is a portrait orientation, and wherein the second orientation is a landscape orientation.

17. A system as set forth in claim 15
    wherein a length range and a width range are each predetermined to be approximately equal to expected ranges of lengths and widths of textual characters.

18. A system as set forth in claim 15
    wherein said means (20) for determining a spatial relationship includes means for determining an amount of a spatial separation between a span and an adjacent span on the same scanline and also to an adjacent span an a succeeding scanline.

19. A system as set forth in claim 15
    wherein said examining means (20) includes means (18) for storing indications of said detected occurrences in a doubly linked list of image objects.

20. A process for automatically determining a first or second direction of presumed text in an image of the text, comprising the steps of:

preprocessing, if necessary, the image of the text to place the image into a predetermined format, the image containing at least one line of text;

performing a pass over the preprocessed image on a scanline by scanline basis and, while performing the pass,

tabulating first counts of individual ones of validated objects whose nearest neighbour objects are disposed in a first direction relative to the validated object, and that are within a first predetermined distance of the validated object;

tabulating second counts of individual ones of validated objects whose nearest neighbour objects are disposed in a second direction relative to the validated object, and that are within a second predetermined distance of the validated object;

wherein one of the first and second directions is parallel to the scanline and the other direction is orthogonal to the scanline;

terminating the pass when a decision process, based on the first and the second counts, determines the direction of presumed text; and

declaring lines of presumed text in the image to lie in the first direction or in the second direction and performing one of setting a stored image rotation indicator accordingly or rotating the image prior to storage, wherein

a validated object is an object having a bounding box whose width dimension is not less than a minimum acceptable width, whose length dimension is not more than a maximum acceptable length, whose aspect ratio of length to width is not more than a maximum acceptable aspect ratio, and whose distance to a nearest neighbouring object in the first or the second direction is within a predetermined threshold distance.

21. A process as set forth in claim 20
wherein the first direction and the second direction are to the right and below, respectively.

22. A process as set forth in claim 20
wherein the step of preprocessing includes a step of preparing the image by forming a reduced and/or standardized image at a fixed resolution and format.

23. A process as set forth in claim 22
wherein the standardized format is selected from one of: scanlines in order from image top to image bottom; and scanline bytes in order from left to right.

24. A process as set forth in claim 23
wherein bits in each scanline byte in order have a most significant bit (MSB) leftmost in the image, with 1-bits representing foreground pixels and 0-bits representing background pixels.

25. A process as set forth in claim 22
wherein the step of preprocessing the image includes a step of removing extra-long spans of contiguous foreground pixels, where a span is a maximal contiguous set of foreground pixels along a scanline, bounded by background pixels on left and right ends.

26. A process as set forth in claim 25
where, after removal of the extra-long spans of contiguous pixels, the method includes a further step of removing any remaining foreground pixels that have no immediately adjacent foreground pixels that are located directly above or below.

27. A process as set forth in claim 20
wherein objects are considered to be disjoint sets of spans resulting from the partition of foreground spans of the image, such that each set is transitively connected, where a span is a maximal contiguous set of foreground pixels along a scanline, bounded by background pixels on left and right ends.

**28.** A process as set forth in claim 20
wherein the location and dimensions of an object's bounding box are taken as the leftmost, rightmost, topmost, and bottommost coordinates of pixels comprising spans that comprise the object, where a span is a maximal contiguous set of foreground pixels along a scanline, bounded by background pixels on left and right ends.

**29.** A process as set forth in claim 20
wherein the maximum and minimum dimensions and maximum aspect ratio of bounding boxes are predetermined to be approximately equal to those of bounding boxes of characters of a local language as commonly used.

**30.** A process as set forth in claim 20
wherein a distance to the nearest neighbouring object in the first direction is defined as the closest approach in pixels, along any scanline, of any span of the object with any other span of acceptable length not belonging to this object, and wherein a distance to the nearest neighbouring object in the second direction is a vertical distance in scanlines from a portion of the bottom of a bounding box of the object directly downward to a first encountered span of foreground pixels, where a span is a maximal contiguous set of foreground pixels along a scanline, bounded by background pixels on left and right ends.

**31.** A process as set forth in claim 20
where an acceptable threshold distance from an acceptable object is a function of that object's bounding box dimensions.

**32.** A process as set forth in claim 31
where a maximum acceptable distance is a predetermined fraction of that object's bounding box's width.

**Patentansprüche**

**1.** Verfahren zur Bestimmung, ob eine digitalisierte Seite in einer ersten Ausrichtung oder in einer zweiten Ausrichtung, die gegen die erste Ausrichtung gedreht ist, zu betrachten ist,
mit den Verfahrensschritten:

bei Bedarf Vorverarbeiten einer Abbildung der digitalisierten Seite, um die Abbildung in ein vorbestimmtes Format zu verbringen, wobei die Abbildung wenigstens eine Textzeile enthält,
Überprüfen der vorverarbeiteten Abbildung der digitalisierten Seite je Abtastlinie der Abbildung, um das Auftreten von grafischen Objekten von einer Längenabmessung, die nicht größer als ein größter Längenschwellwert ist, und von einer Breitenabmessung, die nicht kleiner als ein kleinster Breitenschwellwert ist, festzustellen,
bei jedem festgestellten Auftreten Bestimmen räumlicher Beziehungen des festgestellten Auftretens mit anderen, benachbarten grafischen Objekten, wobei die räumlichen Beziehungen an Achsen bestimmt werden, die parallel zu den Abtastlinien und die rechtwinklig zu den Abtastlinien sind, und
in Übereinstimmung mit einer Vielzahl der bestimmten räumlichen Beziehungen Deklarieren, daß die digitalisierte Seite eine Ausrichtung aus der Gruppe mit der ersten und der zweiten Ausrichtung hat, und Durchführen einer Operation aus den Operationen entsprechendes Setzen eines gespeicherten Anzeigers für die Drehung der Seitenabbildung und Drehen der Seitenabbildung vor dem Speichern.

**2.** Verfahren nach Anspruch 1,
bei dem die erste Ausrichtung eine Hochformat-Ausrichtung und die zweite Ausrichtung eine Querformat-Ausrichtung ist.

**3.** Verfahren nach Anspruch 1,
bei dem ein Längenbereich und ein Breitenbereich je so vorbestimmt sind, daß sie erwarteten Längen- und Breitenbereichen textueller Zeichen etwa gleich sind.

**4.** Verfahren nach Anspruch 1,
bei dem der Verfahrensschritt der Überprüfung den Schritt des Erstellens einer Liste je Abtastlinie von Spannen zusammenhängender Abbildungspixel je von einem vorbestimmten Wert enthält.

**5.** Verfahren nach Anspruch 4,

EP 0 767 941 B1

bei dem der Verfahrensschritt der Bestimmung einer räumlichen Beziehung einen Betrag einer räumlichen Trennung zwischen einer Spanne und der nachfolgenden Spanne auf derselben Abtastlinie und einer nachfolgenden Spanne auf einer unmittelbar folgenden Abtastlinie enthält.

6. Verfahren nach Anspruch 4,
bei dem der Verfahrensschritt der Bestimmung einer räumlichen Beziehung bei jeder Spanne der Liste einen Abstand in Pixel zu einer nächsten Spanne auf derselben Abtastlinie bestimmt und bei einer letzten Spanne eines Abbildungsobjektes einen Abstand in Abtastlinien zu einer ersten Spanne auf einer unmittelbar folgenden Abtastlinie.

7. Verfahren nach Anspruch 6,

bei dem jedes Abbildungsobjekt ein zugeordnetes Begrenzungskästchen aufweist, der Abstand zur ersten Spanne auf einer unmittelbar folgenden Abtastlinie eine Höhe eines Sockels unterhalb des Abbildungsobjekts definiert, der Sokel von einer Breite ist und eine seitliche Position einnimmt, die Funktionen einer Breite und eines Ortes des Begrenzungskästchens sind,
und ferner mit einem Schritt des selektiven Inkrementierens eines Zählers aus einer Gruppe mit einem ersten und einem zweiten Zähler in Abhängigkeit von einem Verhältnis zwischen einer Fensterbreite bis zu einer nächsten Spanne auf derselben Abtastlinie und einer Sockelhöhe.

8. Verfahren nach Anspruch 7,
bei dem der Verfahrensschritt des Deklarierens einen Schritt der Bestimmung eines Verhältnisses zwischen einem Wert des ersten Zählers und einem Wert des zweiten Zählers enthält.

9. Verfahren nach Anspruch 1,
bei dem der Verfahrensschritt des Deklarierens ausgeführt wird, bevor im Schritt der Überprüfung jede Abtastlinie der Abbildung geprüft wird.

10. Verfahren nach Anspruch 6,
bei dem der Verfahrensschritt der Bestimmung einen Schritt des Mischens von Abbildungsobjekten enthält, deren Spannen aneinander angrenzend angeordnet sind.

11. Verfahren nach Anspruch 5,
bei dem der Verfahrensschritt der Überprüfung einen Schritt der Feststellung und Entfernung von Spannen enthält, deren Länge entlang der Abtastlinie einen Breitenschwellenwert übersteigt.

12. Verfahren nach Anspruch 5,
bei dem der Verfahrensschritt der Erstellung einen Schritt der Feststellung und der Entfernung von Abbildungspixeln enthält, die kein angrenzendes Abbildungspixel auf einer angrenzenden, vorausgehenden Abtastlinie oder auf einer angrenzenden, unmittelbar folgenden Abtastlinie haben.

13. Verfahren nach Anspruch 1,
bei dem jede Abbildungsabtastlinie so erzeugt wird, daß sie eine erste Anzahl Abbildungspixel je Längeneinheit aufweist, und bei dem der Verfahrensschritt der Vorverarbeitung bei Bedarf einen Schritt des Mischens der Abbildungspixel enthält, um eine vorbestimmte Anzahl Abbildungspixel je Längeneinheit zu erhalten.

14. Verfahren nach Anspruch 1,
bei dem die Abmessung eine zugehörige Abmessung eines orthogonal angeordneten Begrenzungskästchens ist.

15. Dokumentverarbeitungssystem (10) mit einem Eingangsanschluß zum Empfangen einer digitalisierten Seite von einem Seitenscanner (12) und einer Schnittstelle (16), die mit dem genannten Eingangsanschluß verbunden ist, wobei die genannte Schnittstelle umfaßt:

eine Einrichtung (20) zum Bestimmen, ob die digitalisierte Seite (14a) in einer ersten Ausrichtung oder in einer zweiten Ausrichtung, die in bezug auf die erste Ausrichtung gedreht ist, zu betrachten ist, wobei die genannte Bestimmungseinrichtung (20) eine Einrichtung zum bedarfsweisen Vorverarbeiten einer Abbildung der digitalisierten Seite aufweist, um die Abbildung in ein vorbestimmtes Format zu verbringen, wobei die Abbildung wenigstens eine Textzeile enthält,

16

eine Einrichtung (20) zum Überprüfen der vorverarbeiteten Abbildung der digitalisierten Seite Abtastlinie für Abtastlinie der Abbildung, um Auftreten von grafischen Objekten (17) festzustellen, deren Längenabmessung kleiner als eine größter Längenschwellwert ist und deren Breitenabmessung größer als eine kleinste Breitenabmessung ist,

eine Einrichtung (20), die in Abhängigkeit von jedem festgestellten Auftreten eine räumliche Beziehung des festgestellten Auftretens zu anderen, benachbart angeordneten grafischen Objekten zu bestimmen vermag, wobei die räumliche Beziehung entlang Achsen bestimmt wird, die parallel zu den Abtastlinien und die rechtwinklig zu den Abtastlinien sind, und

eine Einrichtung zum Deklarieren, daß die digitalisierte Seite (14a) eine Ausrichtung aus einer Gruppe mit einer ersten und einer zweiten Ausrichtung in Übereinstimmung mit einer Vielzahl der bestimmten räumlichen Beziehungen hat, wobei die genannte Deklarationseinrichtung eine Operation aus den Operationen Setzen eines gespeicherten Anzeigers für die Drehung der Seitenabbildung (18a) zur Angabe der Ausrichtung und Drehen der Seitenabbildung vor dem Speichern ausführt.

**16.** System nach Anspruch 15,
bei dem die erste Ausrichtung eine Hochformat-Ausrichtung und die zweite Ausrichtung eine Querformat-Ausrichtung ist.

**17.** System nach Anspruch 15,
bei dem ein Längenbereich und ein Breitenbereich je so vorbestimmt sind, daß sie erwarteten Längen- und Breitenbereichen textueller Zeichen etwa gleich sind.

**18.** System nach Anspruch 15,
bei dem die genannte Einrichtung (20) zum Bestimmen einer räumlichen Beziehung eine Einrichtung umfaßt, die einen Betrag einer räumlichen Trennung zwischen einer Spanne und einer benachbarten Spanne auf derselben Abtastlinie und auch zu einer benachbarten Spanne auf einer unmittelbar folgenden Abtastlinie zu bestimmen vermag.

**19.** System nach Anspruch 15,
bei dem die genannte Überprüfungseinrichtung (20) eine Einrichtung (18) zum Speichern von Angaben über die genannten festgestellten Auftreten in einer Doppelverbundliste von Abbildungsobjekten umfaßt.

**20.** Verfahren zum automatischen Bestimmen einer ersten oder einer zweiten Ausrichtung von angenommenem Text in einer Abbildung des Textes, mit den Verfahrensschritten:

bei Bedarf Vorverarbeiten der Abbildung des Textes, um die Abbildung in ein vorbestimmtes Format zu verbringen, wobei die Abbildung wenigstens eine Textzeile enthält,
Durchführen eines abtastlinienweisen Durchlaufs an der vorverarbeiteten Abbildung, und während des Durchlaufs
Tabellieren erster Zählwerte einzelner gültiger Objekte, deren nächste Nachbar-Objekte in einer ersten Richtung, bezogen auf das gültige Objekt, angeordnet sind und sich in einem ersten, vorbestimmten Abstand vom gültigen Objekt befinden,
Tabellieren zweiter Zählwerte einzelner gültiger Objekte, deren nächste Nachbar-Objekte in einer zweiten Richtung, bezogen auf das gültige Objekt, angeordnet sind und sich in einem zweiten, vorbestimmten Abstand vom gültigen Objekt befinden,
wobei eine Richtung aus der Gruppe mit der ersten und der zweiten Richtung parallel zur Abtastlinie und die andere Richtung rechtwinklig zur Abtastlinie ist,
Beenden des Durchlaufs, wenn in einem Entscheidungsprozeß aufgrund des ersten und des zweiten Zählwertes die Richtung angenommenen Textes bestimmt wird, und
Deklarieren, daß Zeilen angenommenen Textes in der Abbildung in der ersten oder in der zweiten Richtung laufen, und Durchführen einer Operation aus den Operationen entsprechendes Setzen eines gespeicherten Anzeigers für die Drehung der Abbildung oder Drehen der Abbildung vor dem Speichern, wobei
ein gültiges Objekt ein Objekt mit einem Begrenzungskästchen ist, dessen Breitenabmessung nicht kleiner als eine kleinste annehmbare Breite ist, dessen Längenabmessung nicht größer als eine größte annehmbare Länge ist, dessen Höhen-Breiten-Verhältnis nicht größer als ein größtes annehmbares Längenverhältnis ist, und dessen Abstand zum nächsten Nachbar-Objekt in der ersten oder der zweiten Richtung innerhalb eines vorbestimmten Schwellenwert-Abstandes liegt.

**21.** Verfahren nach Anspruch 20,
bei dem die erste Richtung und die zweite Richtung nach rechts bzw. nach unten weisen.

**22.** Verfahren nach Anspruch 20,
bei dem der Verfahrensschritt der Vorverarbeitung einen Schritt der Herstellung der Abbildung durch Bilden einer verkleinerten und/oder normierten Abbildung mit fester Auflösung und festem Format umfaßt.

**23.** Verfahren nach Anspruch 22,
bei dem das normierte Format ausgewählt ist aus den Formaten Abtastlinien in der Reihenfolge von Bildkopf nach Bildfuß und Abtastlinien-Byte in der Reihenfolge von links nach rechts.

**24.** Verfahren nach Anspruch 23,
bei dem Bit in jedem Abtastlinien-Byte in der Reihenfolge ein höchstwertiges Bit (MSB) am weitesten links in der Abbildung aufweisen, wobei 1-Bit Vordergrundpixel und 0-Bit Hintergrundpixel darstellen.

**25.** Verfahren nach Anspruch 22,
bei dem der Verfahrensschritt der Vorverarbeitung der Abbildung einen Schritt der Entfernung überlanger Spannen zusammenhängender Vordergrundpixel enthält, wobei eine Spanne eine größte zusammenhängende Reihe Vordergrundpixel an einer Abtastlinie ist, die am linken und am rechten Ende von Hintergrundpixeln begrenzt ist.

**26.** Verfahren nach Anspruch 25,
bei dem das Verfahren nach Entfernen der überlangen Spannen zusammenhängender Pixel einen weiteren Schritt der Entfernung übriggebliebener Vordergrundpixel umfaßt, bei denen direkt darüber oder darunter keine unmittelbar benachbarten Vordergrundpixel angeordnet sind.

**27.** Verfahren nach Anspruch 20,
bei dem Objekte als nicht verbundene Spannen-Reihen betrachtet werden, die sich aus der Partition von Vordergrundspannen der Abbildung ergeben, derart, daß jede Reihe transisitiv verbunden ist, wobei eine Spanne ein größte zusammenhängende Reihe Vordergrundpixel an einer Abtastlinie ist, die am linken und am rechten Ende durch Hintergrundpixel begrenzt ist.

**28.** Verfahren nach Anspruch 20,
bei dem der Ort und die Abmessungen eines Objekt-Begrenzungskästchens als die am weitesten links, am weitesten rechts, am weitesten oben und am weitesten unten angeordneten Koordinaten von Pixeln angenommen werden, die das Objekt bildende Spannen bilden, wobei eine Spanne eine größte zusammenhängende Reihe Vordergrundpixel an einer Abtastlinie ist, die am linken und am rechten Ende von Hintergrundpixeln begrenzt ist.

**29.** Verfahren nach Anspruch 20,
bei dem die größten und die kleinsten Abmessungen und das größte Längenverhältnis von Begrenzungskästchens so vorbestimmt sind, daß sie denen von Begrenzungskästchens von Zeichen einer üblicherweise benutzten lokalen Sprache etwa gleich sind.

**30.** Verfahren nach Anspruch 20,
bei dem ein Abstand zum nächsten Nachbar-Objekt in der ersten Richtung als die in Pixel gemessene größte Nähe einer beliebigen Abtastlinie einer beliebigen Spanne des Objektes zu einer beliebigen anderen Spanne von annehmbarer Länge, die nicht zu diesem Objekt gehört, definiert ist, und bei dem ein Abstand zum nächsten Nachbar-Objekt in der zweiten Richtung ein in Abtastlinien gemessener vertikaler Abstand zwischen einem Abschnitt des unteren Endes eines Begrenzungskästchens des Objektes direkt nach unten zu einer zuerst angetroffenen Spanne von Vordergrundpixeln ist, wobei eine Spanne eine größte zusammenhängende Reihe Vordergrundpixel an einer Abtastlinie ist, die am linken und am rechten Ende von Hintergrundpixeln begrenzt ist.

**31.** Verfahren nach Anspruch 20,
bei dem ein annehmbarer Schwellenwert-Abstand von einem annehmbaren Objekt abhängig von den Abmessungen des Begrenzungskästchens dieses Objektes ist.

**32.** Verfahren nach Anspruch 31,
bei dem ein größter annehmbarer Abstand ein vorbestimmter Bruchteil der Breite des Begrenzungskästchens dieses Objektes ist.

**Revendications**

1. Procédé pour déterminer si une page numérisée doit être visualisée selon une première orientation ou selon une seconde orientation correspondant à une rotation par rapport à la première orientation, comprenant les étapes de :

   prétraitement, si nécessaire, d'une image de la page numérisée pour placer l'image dans un format prédéterminé, l'image contenant au moins une ligne de texte ;
   examen, ligne de balayage par ligne de balayage, de l'image prétraitée de la page numérisée pour détecter les occurrences d'objets graphiques ayant une longueur inférieure ou égale à un seuil de longueur maximale et une largeur supérieure ou égale à un seuil de largeur minimale ;
   pour chaque occurrence détectée, détermination des relations spatiales de occurrence détectée et d'autres objets graphiques voisins, les relations spatiales étant déterminées suivant des axes parallèles aux lignes de balayage et perpendiculaires aux lignes de balayage ; et
   en fonction d'une pluralité de relations spatiales déterminées, déclaration que la page numérisée a l'une ou l'autre des première et seconde orientations et, soit mettre en place un indicateur de rotation de la page image mémorisée, soit mettre en oeuvre la rotation de la page image avant la mémorisation.

2. Procédé tel que décrit dans la revendication 1, dans lequel la première orientation est une orientation portrait et dans lequel la seconde orientation est une orientation paysage.

3. Procédé tel que décrit dans la revendication 1, dans lequel une plage de longueurs et une plage de largeurs sont chacune prédéterminées comme étant approximativement égales aux plages de longueurs et de largeurs prévues pour les caractères de texte.

4. Procédé tel que décrit dans la revendication 1, dans lequel l'étape d'examen comprend une étape de formation, pour chaque ligne de balayage, d'une liste de plages de pixels d'image contigus ayant chacune une valeur prédéterminée.

5. Procédé tel que décrit dans la revendication 4, dans lequel l'étape de détermination d'une relation spatiale détermine une valeur de séparation dans l'espace entre une plage et la plage suivante située sur la même ligne de balayage et entre cette plage et la plage suivante située sur la ligne de balayage suivante.

6. Procédé tel que décrit dans la revendication 4, dans lequel l'étape de détermination d'une relation spatiale détermine, pour chaque plage de la liste, une distance en pixels par rapport à la plage suivante située sur la même ligne de balayage, et pour la dernière plage d'un objet image, une distance en lignes de balayage par rapport à la première plage de la ligne de balayage suivante.

7. Procédé tel que décrit dans la revendication 6, dans lequel chaque objet image est associé à un cadre de contour, dans lequel la distance par rapport à la première plage d'une ligne de balayage suivante définit la hauteur d'un palier de suppression de ligne sous l'objet image, dans lequel le palier de suppression de ligne a une largeur et une position latérale qui dépendent de la largeur et de la position du cadre de contour, procédé comprenant aussi une étape d'incrémentation sélective d'un premier compteur et d'un second compteur en fonction du rapport entre la largeur d'une fenêtre proportionnelle à la plage suivante située sur la même ligne de balayage et la hauteur du palier de suppression de ligne.

8. Procédé tel que décrit dans la revendication 7, dans lequel l'étape de déclaration comprend une étape de détermination du rapport entre une valeur du premier compteur et une valeur du second compteur.

9. Procédé tel que décrit dans la revendication 1, dans lequel l'étape de déclaration est effectuée avant l'étape d'examen de chaque ligne de balayage de l'image.

10. Procédé tel que décrit dans la revendication 6, dans lequel l'étape de détermination comprend une étape de fusion des objets images dont les plages sont adjacentes.

11. Procédé tel que décrit dans la revendication 5, dans lequel l'étape d'examen comprend une étape de détection et d'élimination des plages dont la longueur, suivant la ligne de balayage, dépasse le seuil de largeur.

**12.** Procédé tel que décrit dans la revendication 5, dans lequel l'étape de formation comprend une étape de détection et d'élimination des pixels d'image qui n'ont pas de pixel d'image adjacent sur la ligne de balayage adjacente précédente ou sur la ligne de balayage adjacente suivante.

**13.** Procédé tel que décrit dans la revendication 1, dans lequel chaque ligne de balayage de l'image est générée de manière à obtenir un premier nombre de pixels d'image par unité de longueur, et dans lequel l'étape de prétraitement comprend, si nécessaire, une étape de fusion des pixels d'image de manière à obtenir un nombre prédéterminé de pixels d'image par unité de longueur.

**14.** Procédé tel que décrit dans la revendication 1, dans lequel la dimension est la dimension respective d'un cadre de contour disposé de manière orthogonale.

**15.** Système de traitement des documents (10) comprenant un port d'entrée pour recevoir les informations relatives à une page numérisée transmises par un scanner (12) et une interface (16) couplée audit port d'entrée, ladite interface comprenant :

un dispositif (20) permettant de déterminer si la page numérisée (14a) doit être visualisée selon une première orientation ou selon une seconde orientation correspondant à une rotation par rapport à la première orientation, ledit dispositif de détermination (20) comprenant un dispositif permettant de prétraiter, si nécessaire, une image de la page numérisée, de placer l'image dans un format prédéterminé, l'image contenant au moins une ligne de texte ;
un dispositif (20) permettant d'examiner, ligne de balayage par ligne de balayage, l'image prétraitée de la page numérisée pour détecter les occurrences d'objets graphiques (17) ayant une longueur inférieure à un seuil de longueur maximale et une largeur supérieure à un seuil de largeur minimale ;
un dispositif (20), sensible à chaque occurrence détectée, permettant de déterminer la relation spatiale entre occurrence détectée et d'autres objets graphiques adjacents, la relation spatiale étant déterminée suivant des axes parallèles aux lignes de balayage et perpendiculaires aux lignes de balayage ; et
un dispositif permettant de déclarer que la page numérisée (14a) a la première ou la seconde orientation en fonction d'une pluralité de relations spatiales déterminées, ledit dispositif de déclaration permettant soit de mettre en place un indicateur de rotation de la page image mémorisée (18a) pour indiquer l'orientation, soit de mettre en oeuvre la rotation de la page image avant la mémorisation.

**16.** Système tel que décrit dans la revendication 15, dans lequel la première orientation est une orientation portrait et dans lequel la seconde orientation est une orientation paysage.

**17.** Système tel que décrit dans la revendication 15, dans lequel une plage de longueurs et une plage de largeurs sont chacune prédéterminées comme étant approximativement égales aux plages de longueurs et de largeurs prévues pour les caractères de texte.

**18.** Système tel que décrit dans la revendication 15, dans lequel ledit dispositif (20) permettant de déterminer une relation spatiale comprend un dispositif permettant de déterminer une valeur de séparation dans l'espace entre une plage et la plage adjacente située sur la même ligne de balayage et entre cette plage et la plage adjacente située sur la ligne de balayage suivante.

**19.** Système tel que décrit dans la revendication 15, dans lequel ledit dispositif d'examen (20) comprend un dispositif (18) permettant de mémoriser des indications relatives auxdites occurrences détectées dans une liste d'objets images à double chaînage.

**20.** Procédé pour déterminer automatiquement une première ou une seconde orientation d'un texte présumé dans une image du texte, comprenant les étapes de :

prétraitement, si nécessaire, de l'image du texte pour placer l'image dans un format prédéterminé, l'image contenant au moins une ligne de texte ;
réalisation d'un passage, ligne de balayage par ligne de balayage, sur l'image prétraitée, et tout en effectuant ce passage,
totalisation des premiers comptes d'objets individuels validés pour lesquels les objets voisins les plus proches sont situés dans une première direction par rapport à l'objet validé et à une distance de l'objet validé inférieure ou égale à une première valeur prédéterminée ;

totalisation des seconds comptes d'objets individuels validés pour lesquels les objets voisins les plus proches sont situés dans une seconde direction par rapport à l'objet validé et à une distance de l'objet validé inférieure ou égale à une seconde valeur prédéterminée ;

dans lequel l'une des première et seconde directions est parallèle à la ligne de balayage et l'autre direction est perpendiculaire à la ligne de balayage ;

achèvement du passage lorsqu'un procédé de décision, basé sur les premiers et seconds comptes, détermine l'orientation du texte présumé ; et

déclaration que les lignes du texte présumé contenu dans l'image se situent dans la première direction ou dans la seconde direction et soit mise en place d'un indicateur de rotation d'image mémorisée, soit mise en oeuvre de la rotation de l'image avant la mémorisation, procédé dans lequel un objet validé est un objet ayant un cadre de contour dont la largeur n'est pas inférieure à la largeur minimale acceptable, dont la longueur n'est pas supérieure à la longueur maximale acceptable, dont le rapport de la longueur à la largeur n'est pas supérieur au rapport maximal acceptable, et dont la distance par rapport à l'objet voisin le plus proche dans la première ou la seconde direction est inférieure ou égale à une distance seuil prédéterminée.

21. Procédé tel que décrit dans la revendication 20, dans lequel la première direction et la seconde direction sont respectivement vers la droite et vers le bas.

22. Procédé tel que décrit dans la revendication 20, dans lequel l'étape de prétraitement comprend une étape de préparation de l'image en formant une image réduite et/ou normalisée ayant une résolution et un format fixés.

23. Procédé tel que décrit dans la revendication 22, dans lequel le format normalisé est choisi entre : les lignes de balayage dans l'ordre du sommet de l'image au bas de l'image, et les octets d'une ligne de balayage dans l'ordre de gauche à droite.

24. Procédé tel que décrit dans la revendication 23, dans lequel les binaires de chaque octet de ligne de balayage ont un binaire le plus significatif (MSB) situé le plus à gauche dans l'image, les bits 1 représentant les pixels de premier plan et les bits 0 représentant les pixels d'arrière plan.

25. Procédé tel que décrit dans la revendication 22, dans lequel l'étape de prétraitement de l'image comprend une étape de suppression des plages extra-longues de pixels de premier plan contigus, où une plage est un ensemble maximal de pixels de premier plan contigus suivant une ligne de balayage, limité par des pixels d'arrière plan aux extrémités gauche et droite.

26. Procédé tel que décrit dans la revendication 25, comprenant, après suppression des plages extra-longues de pixels contigus, une étape supplémentaire de suppression de tous les pixels de premier plan restants qui n'ont pas de pixels de premier plan immédiatement adjacents situés directement au-dessus ou au-dessous.

27. Procédé tel que décrit dans la revendication 20, dans lequel les objets sont considérés comme des ensembles disjoints de plages résultant du cloisonnement des plages de premier plan de l'image, de telle sorte que chaque ensemble est lié de manière transitoire, une plage étant l'ensemble maximal de pixels de premier plan contigus suivant une ligne de balayage, limité par des pixels d'arrière plan aux extrémités gauche et droite.

28. Procédé tel que décrit dans la revendication 20, dans lequel la position et les dimensions du cadre de contour d'un objet sont définies comme les coordonnées des pixels les plus à gauche, plus à droite, plus en haut et plus en bas constituant des plages comprenant l'objet, où une plage est l'ensemble maximal de pixels de premier plan contigus suivant une ligne de balayage, limité par des pixels d'arrière plan aux extrémités gauche et droite.

29. Procédé tel que décrit dans la revendication 20, dans lequel les dimensions maximale et minimale et le rapport maximal de la longueur à la largeur des cadres de contour sont prédéterminés de manière à être approximativement égaux à ceux des cadres de contour des caractères de la langue locale couramment utilisée.

30. Procédé tel que décrit dans la revendication 20, dans lequel la distance par rapport à l'objet voisin le plus proche dans la première direction est définie comme la distance la plus étroite en pixels, suivant une ligne de balayage quelconque, entre n'importe quelle plage de l'objet et toute autre plage de longueur acceptable n'appartenant pas à cet objet, et dans lequel la distance par rapport à l'objet voisin le plus proche dans la seconde direction est la distance verticale en lignes de balayage entre une partie du bas du cadre de contour de l'objet et la première plage de pixels de premier plan rencontrée, où une plage est l'ensemble maximal de pixels de premier plan contigus suivant une ligne de balayage, limité par des pixels d'arrière plan aux extrémités gauche et droite.

31. Procédé tel que décrit dans la revendication 20, dans lequel la distance seuil acceptable par rapport à un objet acceptable dépend des dimensions du cadre de contour de cet objet.

32. Procédé tel que décrit dans la revendication 31, dans lequel la distance maximale acceptable est une fraction prédéterminée de la largeur du cadre de contour de cet objet.

EP 0 767 941 B1

FIG. 1

FIG. 2

EP 0 767 941 B1

SCANLINES

16

| LIST SPANS | A |

| TRACK PEDESTALS | B |

| MERGE ADJACENT OBJECTS | C |

| PROCESS DEVELOPING OBJECTS | D |

| SPAWN NEW OBJECTS | E |

| TRACK WINDOW WIDTHS | F |

PORTRAIT/LANDSCAPE

*FIG. 3*

bCoAnuvy

*FIG. 4*

A

B

```
PREV    - - - - X X X - - - - - - - - - - - - - - - - - -          THIS
THIS    - - - - X X X (X) - - - - (X X X X) - - - (X X) - - - -
NEXT    -(X X X X X X X X X X X X X X X X X X X X X X X X)- -

PREV    - - - - X X X - - - - - - - - - - - - - - - - - -
THIS    - - - - X X X - - - - - - - - - - - - - - - - - -          BECOMES THIS
NEXT    - - - - - - - - - - - - - - - - - - - - - - - - -
```

*FIG. 5A*

```
                |←---PEDESTAL---→|
PREV    - - - |- - - - - - - -| - - X X X X
THIS    - - - - - - X X X X X X X X - -                      FIG. 5B
NEXT    - - - - X X X - - - - - - - - -
```

```
        |←OBJ→|        |←OBJ→|        |←OBJ→|
PREV    - |X X -|- -|- X X|- -|X X X|- -
THIS    - |- - X X X X X X X X X X|- -
NEXT    - |- - - X X X X X X X X -|- -
              RESULTANT
               OBJECT                          FIG. 5C
```

FIG.5D

FIG.5E

FIG.5F

FIG. 5G